# EUROPÄISCHE PATENTSCHRIFT

(11) **EP 2 284 362 B1**
(45) Veröffentlichungstag und Bekanntmachung des Hinweises auf die Patenterteilung: **05.09.2018**
(21) Anmeldenummer: 10007922.7
(22) Anmeldetag: 29.07.2010
(51) Int. Cl.: F01D 5/02, F01D 5/28

(54) **Triebwerkswelle in hybrider Bauweise**
Engine shaft in a hybrid design
Conception hybride d'un arbre moteur

(30) Priorität: 13.08.2009 DE 102009037049
(43) Veröffentlichungstag der Anmeldung: 16.02.2011
(73) Patentinhaber: Rolls-Royce Deutschland Ltd & Co KG, 15827 Blankenfelde-Mahlow (DE)
(72) Erfinder: Schreiber, Karl, 15838 Am Mellensee (DE)
(74) Vertreter: Hoefer & Partner Patentanwälte mbB

(56) Entgegenhaltungen:
- EP-A1- 0 029 093
- EP-A2- 1 083 345
- EP-A2- 1 900 946
- DE-A1- 4 119 359
- DE-T2- 69 304 689
- JP-A- 63 166 519
- US-A- 4 663 819
- US-A- 4 834 693
- US-A1- 2007 213 136

## Beschreibung

Die Erfindung betrifft eine Triebwerkswelle in hybrider Bauweise, insbesondere die Niederdruckturbinenwelle oder die Radialwelle eines Gasturbinentriebwerks, bestehend aus einem Faserverbundkunststoffrohr, das an den Enden mit einem außen verzahnten Kraftübertragungselement verbunden ist.

Um bei vermindertem Gewicht und begrenztem Außendurchmesser der Triebwerkswellen von Gasturbinentriebwerken dennoch hohe Drehmomente betriebssicher übertragen zu können, wurde bereits vorgeschlagen, die Triebwerkswelle aus einem im Wesentlichen aus Kohlenstofffasern bestehenden Faserverbundkunststoffrohr und an den Enden unlösbar in den Faserverbund eingebundenen, an der freien Außenfläche verzahnt ausgebildeten Lasteinleitungs-bzw. Lastableitungselementen aus Stahl herzustellen. Die Verbindung des Faserverbundmaterial mit dem metallischen Kraftübertragungselement erfolgt über einen an dieses angeformten, sich konisch verjüngenden Adapter, so dass eine geschäftete Verbindung mit einem allmählichen Übergang von einem dominierenden Faserbereich zu einem dominierenden metallischen Bereich geschaffen wird. Zur Übertragung von möglichst hohen Torsionskräften über den kleinen Verbindungsbereich sind an die Außenfläche des konischen Adapters Pylonen angeformt, an denen die Fasern umgelenkt und entsprechend dem Faserverlauf in dem Faserverbundmaterial geführt sind.

Aus der EP 0 029 093 A1 ist eine Antriebswelle aus faserverstärktem Kunststoff mit fest gewickelten Endstücken vorbekannt. Die Antriebswelle umfasst ein rohrförmiges Hauptteil aus faserverstärktem Kunststoff, welches mit einem Endstück aus Metall verbunden ist. Dieses Endstück ist mit einer Verbindungseinrichtung verschweißt.

Die EP 1 900 946 A2 zeigt eine Welle, bei welcher ein Faserverbundkunststoffrohr mit metallischen Endstücken verbunden ist. Die Verbindung erfolgt über Noppen, die an den metallischen Endstücken vorgesehen sind. Eine ähnliche Ausgestaltung zeigt auch die DE 693 04 689 T2. Dabei ist der Übergangsbereich zwischen dem Kraftübertragungselement und dem Kunststoffrohr, welches aus einem thermoplastischen und warmhärtenden Material besteht, zylindrisch oder konisch.

Der Erfindung liegt die Aufgabe zugrunde, eine in hybrider Bauweise aus einem Faserverbundkunststoffrohr und einem Kraftübertragungselement aus Stahl bestehende Triebwerkswelle so auszubilden, dass im Triebwerksbetrieb auch bei erhöhten Temperaturen eine innige und feste Verbindung zwischen dem Faserverbundmaterial und dem Kraftübertragungselement und eine sichere Kraftübertragung sowie eine lange Lebensdauer der Triebwerkswelle gewährleistet sind.

Erfindungsgemäß wird die Aufgabe mit einer gemäß den Merkmalen des Patentanspruchs 1 ausgebildeten Triebwerkswelle gelöst. Zweckmäßige Weiterbildungen der Erfindung sind Gegenstand der Unteransprüche.

Der Kern der Erfindung besteht darin, dass das an den Wellenenden eines Faserverbundkunststoffrohres befestigte Kraftübertragungselement zweiteilig ausgebildet ist und ein aus einem Stahl bestimmter Härte bestehendes Verzahnungsteil sowie ein stirnseitig mit diesem verschweißtes, sich verjüngendes und zur Ausbildung einer geschäfteten Verbindung von dem Faserverbundmaterial umschlossenes Adapterteil umfasst, dessen Wärmeausdehnung etwa gleich dem Ausdehnungsverhalten des Faserverbundmaterials ist. Die annähernd gleiche Wärmeausdehnung der Werkstoffpaarung im Verbindungsbereich in Kombination mit der sich entgegengesetzt ändernden Materialstärke aufgrund der geschäfteten Verbindung gewährleistet auch bei hohen Betriebstemperaturen eine sichere Übertragung hoher Kräfte sowie eine Verminderung der Spannungen zwischen den unterschiedlichen Werkstoffen im Verbindungsbereich und eine lange Lebensdauer der Welle.

In weiterer Ausbildung der Erfindung besteht das Faserverbundmaterial aus in ein hochtemperaturbeständiges Harzsystem eingebetteten Kohlenstofffasern und das Adapterteil aus einer Invarlegierung, deren jeweiliger thermischer Ausdehnungskoeffizient nahe Null und annähernd gleich ist.

In Ausgestaltung der Erfindung sind das Verzahnungsteil und das Adapterteil durch eine Rotationsreibschweißverbindung miteinander verbunden.

In weiterer Ausgestaltung der Erfindung sind auf der Außenumfangsflache des Adapterteils Pylone zur Umführung und Halterung der Fasern des Faserverbundmaterials ausgebildet.

In noch weiterer Ausgestaltung der Erfindung ist die Verjüngung des Adapterteils in Stufen ausgeführt und die Pylone sind auf den Stufen angeordnet.

In weiterer Ausgestaltung der Erfindung besteht das Verzahnungsteil aus einem Einsatzstahl.

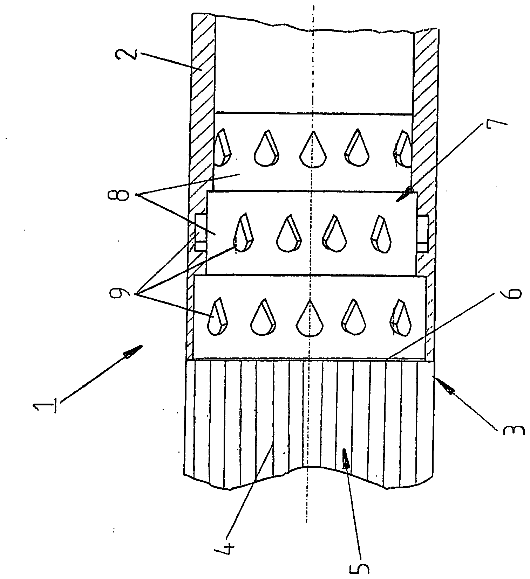

Ein Ausführungsbeispiel der Erfindung wird anhand der Zeichnung, in deren einziger Figur eine in hybrider Bauweise ausgebildete Triebwerkswelle im Bereich der Verbindungsstelle zwischen dem Kraftübertragungselement und dem Faserverbundkunststoffrohr schematisch dargestellt ist, näher erläutert.

Die Triebwerkswelle 1 umfasst ein Faserverbundkunststoffrohr 2, bestehend aus CFK, das heißt, in eine Kunststoffmatrix eingebetteten Kohlenstofffasern, und ein an den Enden der Triebwerkswelle 1 mit dem Faserverbundkunststoffrohr 2 verbundenes Kraftübertragungselement 3 aus Stahl. Das Kraftübertragungselement 3 weist eine Verzahnung 4 auf, um mit der - beispielsweise als Niederdruckturbinenwelle dienenden Triebwerkswelle - in ein Getriebe einzugreifen und den Fan eines Gasturbinentriebwerks anzutreiben. Das Kraftübertragungselement 3 ist zweiteilig ausgebildet und weist ein aus einem Stahl bestimmter Härte, zum Beispiel einem Einsatzstahl, bestehendes Verzahnungsteil 5 und ein stirnseitig mit diesem durch eine Rotationsreibschweißverbindung 6 verbundenes Adapterteil 7 auf. Das mit dem Faserverbundkunststoffrohr 2 verbundene Adapterteil 7 ist in Längsrichtung der Triebwerkswelle 3 in Stufen 8 verjüngt ausgebildet, um einen allmählichen Übergang zwischen den beiden Werkstoffen (Stahl und Faserverbundmaterial) mit unterschiedlichen Eigenschaften zu schaffen. In jeder Stufe sind in Umfangsrichtung angeordnete Pylone 9 angeordnet, um die die Kohlenstofffasern des Faserverbundkunststoffrohres 2 gelegt sind, so dass eine innige und feste Verbindung zwischen dem Faserverbundwerkstoff und dem Kraftübertragungselement hergestellt wird. Das separat gefertigte, sich verjüngende Adapterteil 7 besteht aus einer als Invarstahl bezeichneten Eisen-Nickel-Legierung, deren thermischer Ausdehnungskoeffizient bei 20°C etwa 2x10⁻⁶ K⁻¹ beträgt und damit annähernd im Bereich der Wärmeausdehnung der Kohlenstofffasern (Ausdehnungskoeffizient α=0+/-1 10-6 K⁻¹) des Faserverbundkunststoffrohres 2 liegt. Durch die synergistische Wirkung der geschäfteten Verbindung, mit der geringe Schubspannungen und eine gleichmäßige Übertragung der Schubspannungen erreicht wird, und der Ausbildung der Verbindungselemente aus Werkstoffen mit gleicher, das heißt nahe Null liegender Wärmeausdehnung ist trotz des großen Temperaturbereichs von -50°C bis +180 °C (für eine Radialwelle) bzw. +250°C (für eine Niederdruckwelle), in dem die Triebwerkswelle 1 betrieben wird, auch bei hohen Temperaturen eine feste Verbindung und eine sichere Übertragung der sehr hohen Kräfte zwischen dem Faserverbundkunststoffrohr und dem Kraftübertragungselement bzw. der Antriebsseite und der Abtriebsseite der Triebwerkswelle gewährleistet. Verbleibende Unterschiede in der Wärmeausdehnung werden zudem durch die geschäftete Ausbildung (entgegengesetzte Wandstärken) im Verbindungsbereich zwischen dem Adapterteil 7 und Faserverbundkunststoffrohr 2 ausgeglichen.

### Bezugszeichenliste

- 1: Triebwerkswelle
- 2: Faserverbundkunststoffrohr
- 3: Kraftübertragungselement
- 4: Verzahnung
- 5: Verzahnungsteil
- 6: Rotationsreibschweißverbindung
- 7: Adapterteil
- 8: Stufen von 7
- 9: Pylone

## Patentansprüche

1. Triebwerkswelle in hybrider Bauweise, insbesondere Niederdruckturbinenwelle oder Radialwelle eines Gasturbinentriebwerks, bestehend aus einem Faserverbundkunststoffrohr (2), das an den Enden mit einem außen verzahnten Kraftübertragungselement (3) verbunden ist, wobei das Kraftübertragungselement (3) zweiteilig ausgebildet ist und ein aus einem Stahl bestimmter Härte bestehendes Verzahnungsteil (5) sowie ein stirnseitig mit diesem verschweißtes, sich verjüngendes und zur Ausbildung einer geschäfteten Verbindung von dem Faserverbundmaterial umschlossenes Adapterteil (7) umfasst, **dadurch gekennzeichnet dass** das Adapterteil (7) einen anderen Werkstoff umfasst als das Verzahnungsteil (5) und dass die Wärmeausdehnung des Adapterteils (7) etwa gleich dem Ausdehnungsverhalten des Faserverbundmaterials ist.

2. Triebwerkswelle nach Anspruch 1, **dadurch gekennzeichnet, dass** das Faserverbundmaterial aus in ein hochtemperaturbeständiges Harzsystem eingebetteten Kohlenstofffasern und das Adapterteil (7) aus einer Invarlegierung besteht, deren jeweiliger thermischer Ausdehnungskoeffizient nahe Null und annähernd gleich ist.

3. Triebwerkswelle nach Anspruch 1, **dadurch gekennzeichnet, dass** das Verzahnungsteil (5) und das Adapterteil (7) durch eine Rotationsreibschweißverbindung miteinander verbunden sind.

4. Triebwerkswelle nach Anspruch 1, **dadurch gekennzeichnet, dass** auf der Außenumfangsfläche des Adapterteils Pylone (9) zur Umführung und Halterung des Fasermaterials ausgebildet sind.

5. Triebwerkswelle nach Anspruch 1, **dadurch gekennzeichnet, dass** die Verjüngung des Adapterteils (7) in Stufen (8) ausgeführt ist.

6. Triebwerkswelle nach Anspruch 4 oder 5, **dadurch gekennzeichnet, dass** die Pylone (9) auf den Stufen (8) angeordnet sind.

7. Triebwerkswelle nach Anspruch 1, **dadurch gekennzeichnet, dass** das Verzahnungsteil (5) aus einem Einsatzstahl besteht.

## Claims

1. Engine shaft of hybrid design, more particularly the low-pressure shaft or the radial shaft of a gas-turbine engine, including a fiber-composite plastic tube (2) connected at the ends with an externally toothed power transmission element (3), wherein the power transmission element (3) is of the two-part design and includes a toothed part (5) made of steel of a specific hardness and, frontally weldedly connected thereto, a tapering adapter part (7) enclosed by the fiber-composite material to provide a scarf joining,
**characterized in that**
the adapter part (7) comprises a different material than the toothed part (5), and that the thermal expansion of the adapter part (7) approximately equals to the expansion behaviour of the fiber-composite material.

2. Engine shaft in accordance with Claim 1, **characterized in that** the fiber-composite material is made of carbon fibers embedded in a high-temperature resistant resin system and the adapter part (7) of an Invar alloy, with the respective thermal expansion coefficients being nearly zero and approximately equal.

3. Engine shaft in accordance with Claim 1, **characterized in that** the toothed part (5) and the adapter part (7) are joined to each other by a rotational friction weld.

4. Engine shaft in accordance with Claim 1, **characterized in that** pylons (9) for routing and retaining the fiber material are provided on the outer circumferential surface of the adapter part.

5. Engine shaft in accordance with Claim 1, **characterized in that** the taper of the adapter part (7) is provided in steps (8).

6. Engine shaft in accordance with Claim 4 or 5, **characterized in that** the pylons (9) are arranged on the steps (8).

7. Engine shaft in accordance with Claim 1, **characterized in that** the toothed part (5) is made of a case-hardening steel.

## Revendications

1. Arbre de moteur de construction hybride, notamment arbre de turbine basse pression ou arbre radial d'un moteur de turbine à gaz, se composant d'un tube en plastique renforcé par des fibres (2) qui est relié, au niveau de ses extrémités, à un élément de transmission de force (3), denté à l'extérieur, sachant que l'élément de transmission de force (3) est constitué de deux pièces et comprend une pièce dentée (5) constituée d'un acier d'une certaine dureté et un élément adaptateur (7) soudé à celle-ci côté frontal, se rétrécissant et entouré du matériau composite renforcé par des fibres pour créer un joint biseauté,
**caractérisé en ce que**
l'élément adaptateur (7) comprend un autre matériau que la pièce dentée (5) et que la dilatation thermique de l'élément adaptateur (7) est quasiment identique au comportement de dilatation du matériau composite renforcé par des fibres.

2. Arbre de moteur selon la revendication n° 1, **caractérisé en ce que** le matériau composite renforcé par des fibres se compose de fibres de carbone enrobées dans un système de résine résistant aux hautes températures et que l'élément adaptateur (7) se compose d'un alliage Invar, leurs coefficients de dilatation thermique respectifs étant proches de zéro et pratiquement identiques.

3. Arbre de moteur selon la revendication n° 1, **caractérisé en ce que** la pièce dentée (5) et l'élément adaptateur (7) sont reliés ensemble par une liaison soudée par friction en rotation.

4. Arbre de moteur selon la revendication n° 1, **caractérisé en ce que** des pylônes (9) destinés à guider et maintenir le matériau à fibres sont constitués sur la surface circonférentielle extérieure de l'élément adaptateur.

5. Arbre de moteur selon la revendication n° 1, **caractérisé en ce que** le rétrécissement de l'élément adaptateur (7) se fait par étages (8).

6. Arbre de moteur selon la revendication n° 4 ou n° 5, **caractérisé en ce que** les pylônes (9) sont disposés sur les étages (8).

7. Arbre de moteur selon la revendication n° 1, **caractérisé en ce que** la pièce dentée (5) est constituée d'un acier de cémentation.
